# FASCICULE DE BREVET EUROPEEN

(11) **EP 1 211 886 B1**
(45) Date de publication et mention de la délivrance du brevet: **10.03.2004**
(21) Numéro de dépôt: 01000530.4
(22) Date de dépôt: 11.10.2001
(51) Int. Cl.: H04N 5/00, H04N 5/45

(54) **Dispositif de transfert d'un flux de données et procédé associé**
Gerät zum Umleiten eines Datenstroms und entsprechendes Verfahren
Device for transferring a data stream and corresponding method

(30) Priorité: 17.10.2000 FR 0013524
(43) Date de publication de la demande: 05.06.2002
(73) Titulaire: SAGEM S.A., 75015 Paris (FR)
(72) Inventeur: Romao, Fernando M., 78360, MONTESSON (FR)
(74) Mandataire: Schmit, Christian Norbert Marie

(56) Documents cités:
- WO-A-00/41381
- "METHOD FOR DIGITAL VIDEO RECORDING AND TIME SHIFTED PLAYBACK" RESEARCH DISCLOSURE, KENNETH MASON PUBLICATIONS, HAMPSHIRE, GB, no. 416, décembre 1998 (1998-12), page 1632 XP000834104 ISSN: 0374-4353

## Description

La présente invention a pour objet un dispositif de transfert d'un flux de données et son procédé associé. Le domaine de l'invention est celui des réseaux de télécommunications et plus particulièrement celui des appareils connectés à ces réseaux de télécommunication. De tels appareils comportent un nombre important d'informations destinées à les paramétrer. De tels appareils sont par exemple des récepteurs décodeurs de télévision et des téléphones mobiles. Le but de l'invention est de permettre une utilisation plus simple des appareils précités. Un autre but de l'invention est de permettre un transfert aisé d'une connexion d'un appareil à un autre. Un autre but de l'invention est de permettre un transfert aisé du paramétrage d'un appareil vers un autre appareil du même type.

Dans l'état de la technique on connaît les appareils récepteurs décodeurs de télévision qui reçoivent un flux d'informations de télévision via un réseau de type Internet. De tels appareils comportent donc une série de paramètres qui permettent à leurs utilisateurs de visualiser les programmes de télévision qui parviennent jusqu'à l'appareil via le réseau Internet. Selon l'état de la technique ces appareils sont en général munis d'une mémoire de stockage qui permet à l'utilisateur d'enregistrer les programmes de télévision, par exemple lorsqu'il n'est pas présent lors de la diffusion du programme ou lorsqu'il doit s'absenter pour quelques instants et qu'il ne souhaite pas manquer un instant du programme de télévision qu'il est en train de regarder. De tels dispositifs sont en général efficaces mais pas toujours pratiques. Leur efficacité trouve ses limites car l'utilisateur ne peut pas s'affranchir de l'appareil pour visualiser le programme de télévision. Leur côté pratique montre ses limites lorsqu'il s'agit d'un événement diffusé en direct par exemple, et que l'utilisateur ne souhaite pas manquer une miette de l'émission ni la voir en différée.

Un autre problème est que de tels appareils récepteurs décodeurs sont souvent longs et difficiles à paramétrer. Si l'utilisateur doit se rendre en un autre lieu où il existe un autre appareil récepteur décodeur de télévision et qu'il souhaite retrouver le paramétrage qui lui est familier, il n'a d'autre choix que de reparamétrer l'appareil ce qui est long et fastidieux.

Dans l'invention on résout ces problèmes en dotant un appareil récepteur décodeur de télévision, par exemple, de moyens pour établir une communication avec un appareil portable par exemple un téléphone mobile. La communication entre l'appareil récepteur décodeur de télévision et le téléphone mobile est établie soit via un réseau de type Internet, soit via un réseau de type GSM, soit via un réseau local par exemple BlueTooth. Cette liste de possibilités de réseaux pour établir une communication entre l'appareil récepteur décodeur de télévision et le téléphone mobile n'est pas exhaustive. Une fois que la communication est établie entre l'appareil et le téléphone il est alors possible de transférer des paramètres de visualisations propres à l'appareil récepteur décodeur, ou dans une variante, de transférer des images qui peuvent être affichées sur un écran du téléphone mobile. On constate que si les liaisons sont établies via un réseau de type GSM ou un réseau de type Internet, un maintien de la communication entre l'appareil et le téléphone est indépendant de la distance qui les sépare. Si on a transféré des paramètres de visualisation dans le téléphone mobile, il est alors possible de les décharger vers un autre appareil récepteur décodeur à partir de ce téléphone mobile. On effectue ainsi le paramétrage d'un appareil récepteur décodeur de télévision rapidement et de manière simple.

L'invention a donc pour objet un dispositif de transfert d'un flux de données comportant un appareil connecté via un premier réseau de diffusion de données à une source de données caractérisé en ce que l'appareil comporte:
- des moyens pour obtenir un identifiant, sur un deuxième réseau de diffusion de données, d'un téléphone mobile,
- des moyens pour transmettre des données produites par l'appareil à partir de données reçues de la source vers le téléphone mobile et via le deuxième réseau.

L'invention a également pour objet un procédé de transfert d'un flux de données émis par une source de données et reçues par un appareil via un premier réseau de diffusion de données caractérisé en ce que:
- on obtient un identifiant, sur un deuxième réseau, d'un téléphone mobile,
- on produit, dans l'appareil, des données à partir de données reçues via le premier réseau,
- on émet, depuis l'appareil, les donnés produites vers le téléphone mobile via le deuxième réseau.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 une illustration des moyens utiles pour la mise en oeuvre de l'invention ;
- Figure 2 une illustration d'étapes du procédé selon l'invention.

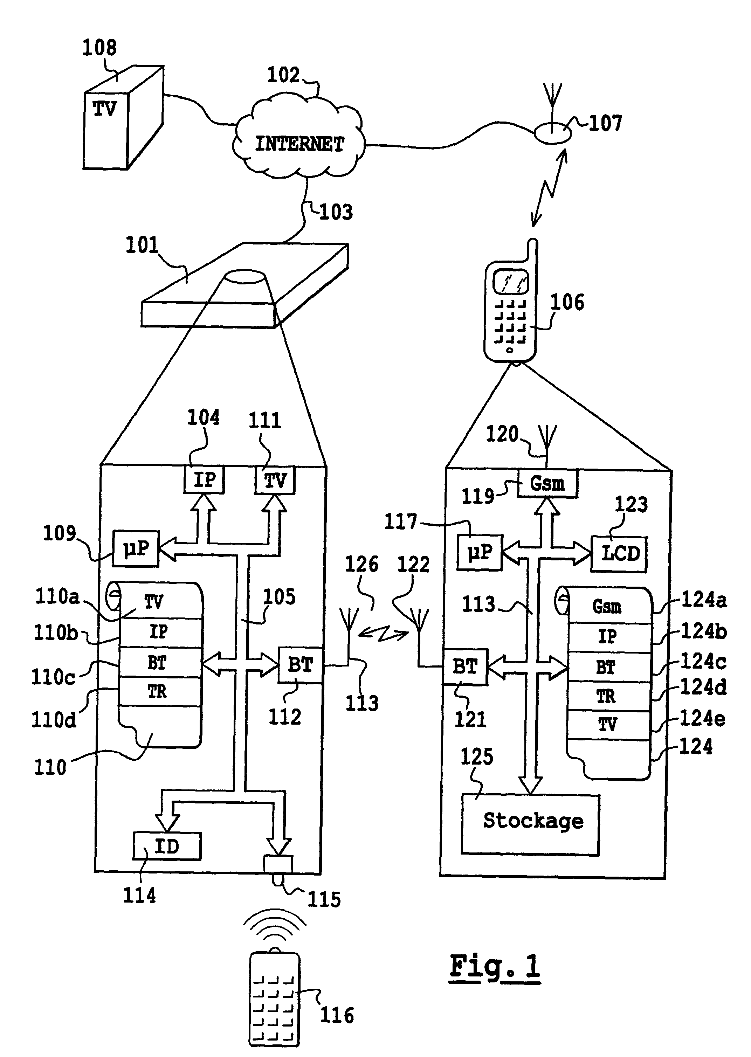

La figure 1 montre un appareil 101 récepteur décodeur de télévision. L'appareil 101 est connecté à un réseau 102 de type Internet via une liaison 103. La nature de la liaison 103 n'a que peu d'importance. Dans l'exemple la liaison 103 est établie via des circuits 104 de l'appareil 101. Ces circuits 104 ont pour rôle d'assurer l'interface entre l'accès au réseau Internet auquel est abonné l'utilisateur de l'appareil 101, par exemple le câble, et un bus 105 interne de l'appareil 101.

La figure 1 montre aussi un téléphone 106 mobile connecté à une station de base 107 d'un réseau cellulaire. Dans l'exemple choisi, pour la description, on considère que le réseau cellulaire est de type GSM. Dans la pratique il pourra être utilisé n'importe quel type utilisé en téléphonie mobile, par exemple DCS, PCS, UMTS ou autre. A l'heure actuelle, les téléphones mobiles sont capables de se connecter à Internet. Cette connexion s'effectue de manière connue via un protocole appelé WTP (Wireless Transfer Protocol, ou protocole de transfert sans fil), qui est le pendant du protocole HTTP (Hypertext Transfer Protocol ou protocole de transfert hypertext) pour les appareils comportant des capacités d'affichage et de calcul de l'ordre de celles des téléphones mobiles. Ainsi lorsqu'il est question dans la description d'une connexion à Internet par le téléphone 106, cette connexion s'effectue de manière connue, comme pour les téléphones WAP.

La figure 1 montre aussi, connecté au réseau 102 Internet, un serveur 108 d'un opérateur de télévision. Le serveur 108 émet des flux de télévision lorsqu'il en reçoit la requête par un appareil récepteur décodeur de télévision appartenant à un utilisateur qui a souscrit un abonnement auprès de l'opérateur gérant le serveur 108. L'origine du flux de télévision peut être autre qu'un serveur connecté au réseau 102. Dans une variante le récepteur décodeur 101 peut être connecté par des moyens hertziens à un satellite de diffusion de programme de télévision il est aussi possible d'utiliser un réseau câblé de télévision.

L'appareil 101 comporte un microprocesseur 109 connecté au bus 105 et qui exécute des programmes enregistrés dans une mémoire 110. La mémoire 110 est connecté au bus 105. Un bus est un ensemble de pistes ou de fils comportant ces éléments en nombre suffisant pour véhiculer des signaux d'adresses, de données, de commandes, d'horloge, d'interruptions et d'alimentation. La mémoire 110 peut être vu comme étant divisée en plusieurs zones, chacune de ces zones correspondant soit à un ensemble de codes instructions formant un programme, soit à une zone de données ou une zone de travail. En particulier la mémoire 110 comporte une zone 110a qui comporte des codes instructions qui commandent le microprocesseur 109 lorsque celui-ci exécute des actions relativement à sa fonction de récepteur décodeur de télévision. C'est-à-dire lorsque l'appareil 101 reçoit un flux d'informations de télévision via les circuits 104, le microprocesseur 109 commandé par les codes instructions de la zone 110a traite ce flux d'informations pour produire une image qu'il fournira à des circuits 111 de télévision. Les circuits 111 sont par exemple des circuits péritels qui permettent de connecter un écran de télévision à l'appareil 101. Les circuits 111 sont connectés au bus 105.

Les codes instructions de la zone 110a correspondent par exemple à un décodeur de fichier au format MPEG. En effet, le format MPEG est la norme la plus employée pour la télévision numérique et les images reçues via Internet.

La mémoire 110 comporte une zone 110b comportant des codes instructions commandant le microprocesseur 109 lorsque celui-ci effectue des actions relativement au réseau Internet. Ces actions sont par exemple l'émission ou la réception de trames selon le protocole HTTP, le protocole FTP ou un autre protocole employé sur le réseau Internet.

La mémoire 110 comporte aussi une zone 110c comportant des codes instructions correspondant à la gestion par le microprocesseur 109 de circuits 112 BlueTooth. Les circuits 112 sont connectés d'une part au bus 105, d'autre part à une antenne 113. Les circuits 112 peuvent donc recevoir, via le bus 105, les données numériques qu'ils transforment en signaux électromagnétiques au format décrit dans la norme BlueTooth. D'autre part les circuits 112 peuvent aussi recevoir, via l'antenne 103, des signaux électromagnétiques qu'ils transforment en signaux numériques qu'ils placent à la disposition du microprocesseur 109 sur le bus 105. Les données utilisées ou produites par les circuits 112 sont gérées par le microprocesseur 109 commandé par des codes instructions d'une zone 110c.

La mémoire 110 comporte aussi une zone 110d comportant des codes instructions qui commandent le microprocesseur 109 lorsque celui-ci effectue un transfert de communication. Un tel transfert correspond à l'établissement d'une communication entre l'appareil 101 et le téléphone 106 afin soit de transférer des paramètres de visualisation d'une émission de télévision, soit des images de l'émission de télévision elle-même. Un tel transfert est aussi envisageable entre deux appareils de même nature, c'est à dire entre deux récepteurs/décodeurs, ou entre deux téléphones.

La mémoire 110 peut comporter d'autres zones non décrites mais connues qui correspondent à des zones de travail ou de stockage de données.

La figure 1 montre aussi que l'appareil 101 comporte une mémoire 114 d'identifiants. La mémoire 114 correspond à une variante de l'invention. Dans cette variante la mémoire 114 comporte un identifiant du téléphone 106 sur un deuxième réseau. Par exemple prenons le réseau Internet. Dans ce cas l'identifiant de la mémoire 114 correspond à une adresse Internet. On rappelle qu'une adresse Internet est composée de 4 octets. Pour que cette variante soit efficace, il faut que l'utilisateur du téléphone 106 possède un abonnement à un opérateur de téléphonie mobile qui lui permette d'avoir une adresse IP fixe. Ainsi on pourra paramétrer efficacement l'appareil 101 via la mémoire 114 pour que celui-ci puisse en permanence établir un contact, via le réseau Internet, avec le téléphone 106.

La figure 1 montre aussi que l'appareil 101 comporte une diode 115, par exemple réceptrice infrarouge, permettant à l'appareil 101 de recevoir les commandes qu'un utilisateur produit grâce à une télécommande 116.

Le téléphone 106 comporte un microprocesseur 117 connecté à un bus 118. Le téléphone 106 comporte aussi des circuits 119 GSM d'une part connecté au bus 118, d'autre part à une antenne 120. Les circuits 119 assurent l'interface entre une station de base à réseau cellulaire et le bus 118 du téléphone 106. Le téléphone 106 comporte aussi des circuits 121 BlueTooth connectés d'une part au bus 118, d'autre part à une antenne 122. Le rôle des circuits 121 pour le téléphone 106 est identique au rôle des circuits 112 pour l'appareil 101. L'appareil 106 comporte aussi un écran 123 connecté au bus 118, ainsi qu'une mémoire 124 qui peut être divisée en plusieurs zones, notamment en zones qui comportent des codes instructions qui commandent le microprocesseur 117 lorsqu'il effectue différentes actions.

Ainsi la mémoire 124 comporte une zone 124a qui comporte les codes instructions qui commandent le microprocesseur 117 lorsque celui-ci effectue des actions relativement à sa fonction de téléphonie mobile. Ces actions correspondent principalement à la gestion d'appels entrants et sortants. La mémoire 124 comporte aussi une zone 124b comportant des codes instructions qui commandent le microprocesseur 117 lorsque celui-ci effectue des actions relativement à une connexion du téléphone 106 au réseau Internet. Une zone 124c comporte des codes instructions qui commandent le microprocesseur 117 lorsque celui-ci effectue des actions relativement à une communication utilisant les circuits 121 et le protocole défini par la norme BlueTooth. Une zone 124d comporte des codes instructions pour commander le microprocesseur 117 lorsque celui-ci effectue des actions relativement à un transfert d'appel ou d'informations entre l'appareil 101 et le téléphone 106. La mémoire 124 comporte aussi une zone 124e comportant des codes instructions qui commandent le microprocesseur 117 lorsque celui-ci doit afficher des images sur l'écran 118. Par exemple le microprocesseur 117 reçoit via le réseau Internet des images à un format compressé et il les décompresse, commandé par les codes instructions de la zone 124e, pour produire une image affichable sur l'écran 118.

Dans une variante de l'invention le téléphone 106 comporte une mémoire 125 de stockage de paramètres. Dans la mémoire 125 le microprocesseur, commandé par les codes instructions de la zone 124d, enregistre des paramètres de visualisation d'un programme de télévision qu'il a reçu de la part de l'appareil 101. Ces paramètres, une fois stockés, peuvent être restitués à destination de l'appareil 101 ou d'un autre appareil de même nature.

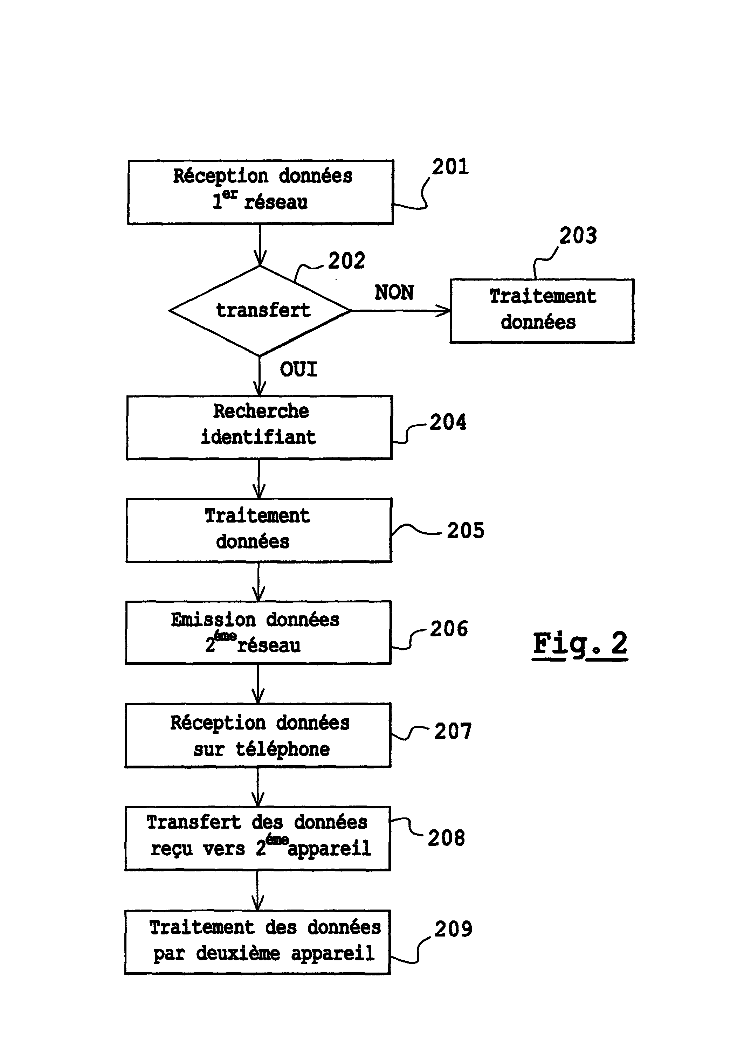

La figure 2 montre une étape 201 préliminaire de réception de données via un premier réseau. Pour la description du procédé de la figure 2 on considère que le premier et le deuxième réseau sont identiques et sont le réseau Internet. Dans l'étape 201, un utilisateur de l'appareil 101 utilise la commande 116 pour paramétrer l'appareil 101 avant que celui-ci produise des images qu'il puisse visualiser via une télévision connectée aux circuits 111. Ce paramétrage consiste par exemple en le choix d'une chaîne de télévision qu'il souhaite regarder. Une fois le paramétrage effectué, le microprocesseur 109 commandé par les codes instructions de la zone 110a reçoit, après avoir émis une requête, de la part du serveur 108 un flux d'informations correspondant au programme sélectionné par l'utilisateur de l'appareil 101. A partir de ce flux d'informations le microprocesseur 109 produit une image qu'il envoie en direction des circuits 111 via le bus 105. Cette image est alors transformée en signaux analogiques qui peuvent être affichés sur l'écran connecté aux circuits 111. Il est aussi possible que l'écran connecté aux circuits 111 soit numérique. Dans ce cas la transformation en signaux analogiques n'est pas nécessaire.

De l'étape 201 on passe à une étape 202 de transfert. Dans l'étape 202 l'utilisateur de l'appareil 101 doit s'éloigner pour une raison quelconque de l'appareil 101 et de l'écran de télévision qui lui est connecté. Soit il déclenche, avec la télécommande 116, soit il ne déclenche pas de transfert. Dans le cas où il ne déclencherait pas de transfert, on passe à une étape 203 de traitement des données. Dans l'étape 203 tout se déroule normalement pour l'appareil 101 qui n'est pas sollicité en dehors de ses fonctions habituelles de récepteur décodeur de télévision. Si le transfert est déclenché on passe à une étape 204 de recherche d'un identifiant. Dans l'étape 204 le microprocesseur 109 est commandé en partie par des codes instructions de la zone 110b et en partie par des codes instructions de la zone 110c. Il existe plusieurs possibilités pour la recherche d'un identifiant. Une première possibilité est qu'on a paramétré dans l'appareil 101 le nom de l'utilisateur propriétaire du téléphone mobile vers on souhaite effectuer le transfert. Cet utilisateur peut être le même que l'utilisateur de l'appareil 101. Dans ce cas l'appareil 101 va émettre une requête sur Internet, en direction d'un serveur d'annuaire par exemple, cette requête comportant le nom de l'utilisateur que l'on cherche à joindre. Le serveur d'annuaire, non représenté, va alors chercher si la personne en question est connectée, grâce à son téléphone mobile, sur le réseau Internet. Si c'est le cas, le serveur annuaire renvoie l'adresse Internet correspondant à l'utilisateur, sinon elle renvoie un message comme quoi il n'est pas possible de joindre l'utilisateur via Internet.

Une deuxième possibilité pour obtenir un identifiant est que le propriétaire du téléphone mobile vers lequel on cherche à effectuer le transfert possède un abonnement qui lui permet d'avoir une adresse Internet permanente. Dans ce cas cette adresse Internet a pu être paramétrée dans la mémoire 114 de l'appareil 101. Pour obtenir l'identifiant, il suffit donc de lire la mémoire 114.

Une troisième possibilité pour obtenir un identifiant est de partir du constat qu'au moment où il déclenche le transfert l'utilisateur est à proximité de l'appareil 101 ainsi que du téléphone 106. Au moment où il déclenche le transfert sur l'appareil 101, celui-ci émet donc une requête via les circuits 112 et l'antenne 113 pour établir une connexion 126 entre l'appareil 101 et le téléphone 106. Cette connexion est établie par le microprocesseur 109 commandé par des codes instructions de la zone 110c. Via cette connexion l'appareil 101 va alors émettre une requête à destination du téléphone 106 afin que celui-ci lui envoie un identifiant qui permettra à l'appareil 101 d'envoyer des messages via le réseau Internet au téléphone 106. Cet identifiant est une adresse Internet. Soit l'utilisateur du téléphone 106 a un abonnement qui lui permet d'avoir une adresse Internet permanente, dans ce cas il suffit au téléphone mobile d'émettre cette adresse, soit l'adresse Internet est fournie à chaque fois que l'utilisateur se connecte Internet, dans ce cas il suffit au téléphone 106 de se connecter à Internet pour obtenir une adresse Internet et la transmettre alors à l'appareil 101.

Dans une variante de l'invention on peut envisager que le deuxième réseau soit par exemple un réseau GSM. Dans ce cas l'identifiant du téléphone 106 est un numéro de téléphone par exemple. Ce numéro de téléphone peut être paramétré dans la mémoire 114. En effet, un numéro de téléphone est considéré comme une constante, il n'est donc pas utile de le rafraîchir à chaque fois que l'on souhaite effectuer un transfert.

De l'étape 204 on passe à une étape 205 de traitement de données. Dans l'étape 205, le microprocesseur 109 commandé par les codes instructions de la zone 117c met en forme les informations qu'il souhaite transmettre au téléphone 106. Ces informations sont, soit des paramètres de l'émission de télévision qu'est en train de visualiser l'utilisateur de l'appareil 101, soit par exemple des images qui puissent être affichées par le téléphone 106. Parmi les paramètres que l'on peut envisager, il y a par exemple la chaîne que l'utilisateur regarde, le titre de l'émission, le volume à laquelle l'émission est regardée, la langue qui est utilisée pour l'émission et il est aussi envisageable que l'utilisateur ait paramétré le scénario qu'il souhaite pour la fin d'un film, le nom des personnages ainsi qu'un certain nombre de paramètres relatifs à la violence ou à des sécurités parentales. Il est en effet envisagé qu'un utilisateur d'un appareil tel que l'appareil 101 puisse à loisir paramétrer les émissions qu'il regarde. Cela constitue donc un volume important d'informations à transférer ou à saisir. Si l'utilisateur souhaite transférer des images, alors il faut tenir compte du fait que l'écran du téléphone 106 est bien plus petit que l'écran connecté à l'appareil 101. Dans ce cas il est inutile de transférer des images intégrales. De même il est inutile de surcharger le téléphone mobile fonctionnant sur batterie avec un traitement visant à réduire la taille de l'image. Cette réduction de la taille de l'image peut donc être effectuée par l'appareil 101 avant le transfert de l'image.

Une fois les données traitées on passe à une étape 206 d'émission des données sur le deuxième réseau. Dans l'étape 206 l'appareil 101 émet des trames sur le deuxième réseau qui dans l'exemple choisit est le réseau Internet. L'adresse destinataire de ces trames est celle du téléphone 106. Ces trames contiennent soit les paramètres de l'émission, soit les images qui peuvent être affichées par le téléphone 106.

Dans une variante de l'invention le réseau n'est pas le réseau Internet mais le réseau GSM. Dans ce cas l'appareil 101 comporte des circuits GSM identiques à ceux du téléphone 106 qui lui permettent alors d'émettre des trams de données via un réseau cellulaire. Ces trames seront reçues en mode données par le téléphone 106. De l'étape 206 on passe à une étape 207 de réception des données sur le téléphone.

Dans l'étape 207 le microprocesseur 117 est commandé par des codes instructions de la zone 124b et 124d. Si le téléphone 106 reçoit des paramètres alors il extrait ces paramètres des trames qu'il reçoit via le réseau Internet et les enregistre dans la mémoire 125 de stockage.

S'il s'agit d'images qui sont reçues alors le microprocesseur 107 commandé par des codes instructions de la zone 124b extraite les images de ces trames, puis commandé par les codes instructions de la zone 124e affiche ces images sur l'écran 123.

Dans les étapes 205 à 207 qui viennent d'être décrites l'appareil 101 et le téléphone 106 sont connectés via le réseau Internet ou un réseau de type GSM. Cela permet à l'utilisateur du téléphone 106 de s'éloigner sensiblement de l'appareil 101 sans que la liaison soit interrompue. En effet tant que l'utilisateur du téléphone 106 est dans une zone couverte par un réseau de téléphonie, le téléphone 106 est en mesure de recevoir les trames émises par l'appareil 101. Dans une variante de l'invention on utilise comme deuxième réseau, un réseau local de type BlueTooth, mais dans ce cas on est limité en portée. L'utilisation du réseau BlueTooth est donc envisageable si un utilisateur de l'appareil 101 regarde un match de tennis et doit se rendre dans sa cuisine, par exemple pour se désaltérer, et ne souhaite manquer aucun échange du match de tennis. Dans ce cas il pourra visionner au cours de son déplacement les images sur son téléphone mobile.

D'une étape 207 on passe à une étape 208 de transfert les données reçues vers un deuxième appareil. Dans l'étape 208 l'utilisateur du téléphone 106 souhaite décharger les informations contenues dans la mémoire 125 en direction d'un appareil de même nature que l'appareil 101, ou en direction de l'appareil 101 lui-même. Dans ce cas il utilise un clavier, non représenté, du téléphone 106 pour déclencher le transfert. Le microprocesseur 117, commandé par les codes instructions de la mémoire 124d va alors produire une ou plusieurs trame d'informations qui seront émises par les circuits 121 via l'antenne 122. Cette trame sera reçue via l'antenne 113 par les circuits 112 qui produiront alors des informations numériques qui pourront être lues par le microprocesseur 109. On passe à une étape 209 de traitement des données par le deuxième appareil. Dans l'exemple on considère que le deuxième appareil est l'appareil 101. Alors le microprocesseur 109 commandé par les codes instructions de la zone 110d extraite des trames qu'il vient de recevoir via les circuits 112 les paramètres initialement stockés dans la mémoire 125. Puis le microprocesseur 109 utilisera ces paramètres pour paramétrer l'appareil 101.

Cela est utile par exemple si l'utilisateur était en train de regarder une émission via l'appareil 101 et que celui-ci doit se déplacer. Heureusement l'utilisateur possède dans sa voiture un autre appareil du type de l'appareil 101 qui permet aux passagers de continuer à regarder l'émission. Dans ce cas l'utilisateur effectue un transfert des paramètres de l'appareil 101 vers le téléphone 106 puis une fois qu'il est dans son véhicule il effectue le transfert inverse en direction de l'appareil qui est dans le véhicule. Il effectue ainsi un paramétrage rapide de l'appareil de son véhicule sans avoir à y passer beaucoup de temps.

Dans une variante de l'invention il est possible d'effectuer à la fois un transfert de paramètres et un transfert d'image. Ainsi durant le temps nécessaire pour aller d'un premier appareil de type 101 à un deuxième appareil de type 101 l'utilisateur peut visualiser les images sur son téléphone mobile.

## Revendications

1. Dispositif de transfert d'un flux de données comportant un appareil (101) connecté via un premier réseau (102) de diffusion de données à une source (108) de données **caractérisé en ce que** l'appareil comporte:
- des moyens (109, 110, 114) pour obtenir un identifiant, sur un deuxième (102) réseau de diffusion de données, d'un téléphone mobile,
- des moyens (109, 110) pour transmettre des données produites par l'appareil à partir de données reçues de la source vers le téléphone mobile et via le deuxième réseau.

2. Dispositif selon la revendication 1, **caractérisé en ce que** l'appareil est un récepteur/décodeur de télévision.

3. Dispositif selon l'une revendication 1 ou 2, **caractérisé en ce que** le premier et le deuxième réseau sont identique et de préférence le réseau Internet.

4. Dispositif selon l'une revendication 1 ou 2, **caractérisé en ce que** le premier réseau est de type Internet et le deuxième réseau est de type GSM.

5. Dispositif selon l'une des revendications 1 ou 2, **caractérisé en ce que** le premier réseau est de type réseau de diffusion de télévision, le deuxième réseau est de préférence de type Internet.

6. Dispositif selon l'une des revendications 1 à 5, **caractérisé en ce que** les moyens pour obtenir un identifiant du téléphone mobile sur le deuxième réseau comportent des circuits (112) pour établir une liaison locale avec le téléphone mobile.

7. Dispositif selon l'une des revendications 1 à 6, **caractérisé en ce que** les moyens pour obtenir un identifiant du téléphone mobile sur le deuxième réseau comporte des circuits (114) pour stocker l'identifiant du téléphone mobile.

8. Procédé de transfert d'un flux de données émis par une source de données et reçues par un appareil via un premier réseau de diffusion de données **caractérisé en ce que**:
- on obtient (204) un identifiant, sur un deuxième réseau, d'un téléphone mobile,
- on produit (205), dans l'appareil, des données à partir de données reçues via le premier réseau,
- on émet(206), depuis l'appareil, les donnés produites vers le téléphone mobile via le deuxième réseau.

9. Procédé selon la revendication 8, **caractérisé en ce que** le flux de données reçues est un flux de télévision.

10. Procédé selon l'une des revendications 8 ou 9, **caractérisé en ce que** le premier et le deuxième réseau sont identique et de préférence le réseau Internet.

11. Procédé selon l'une des revendications 8 ou 9, **caractérisé en ce que** le premier réseau est de type Internet et le deuxième réseau est de type GSM.

12. Procédé selon l'une des revendications 8 ou 9, **caractérisé en ce que** le premier réseau est de type réseau de diffusion de télévision, le deuxième réseau est de préférence de type Internet.

13. Procédé selon l'une des revendications 8 à 12 **caractérisé en ce qu'**on transfert (208) des données reçues par le téléphone mobile via le deuxième réseau vers un deuxième appareil.

## Patentansprüche

1. Vorrichtung zum Umleiten von einem Datenstrom mit einer Einrichtung (101), die über ein erstes Netz (102) zum Übertragen von Daten mit einer Datenquelle (108) verbunden ist, **dadurch gekennzeichnet, dass** die Einrichtung umfasst:
Mittel (109, 110, 114) zum Erfassen einer Identifizierung eines Mobiltelefons über ein zweites Netz (102) zum Übertragen von Daten,
Mittel (109, 110) zum Senden von Daten, die durch die Einrichtung aus den über das Mobiltelefon und über das zweite Netz von der Quelle empfangenen Daten erzeugt wurden.

2. Vorrichtung nach Anspruch 1, **dadurch gekennzeichnet, dass** die Einrichtung ein Fernseh-Empfänger/Decodierer ist.

3. Vorrichtung nach einem der Ansprüche 1 oder 2, **dadurch gekennzeichnet, dass** das erste und das zweite Netz identisch sind und vorzugsweise das Internet sind.

4. Vorrichtung nach einem der Ansprüche 1 oder 2, **dadurch gekennzeichnet, dass** das erste Netz das Internet und das zweite Netz ein GSM-Netz ist.

5. Vorrichtung nach einem der Ansprüche 1 oder 2, **dadurch gekennzeichnet, dass** das erste Netz ein Fernsehübertragungsnetz ist und das zweite Netz vorzugsweise das Internet ist.

6. Vorrichtung nach einem der Ansprüche 1 bis 5, **dadurch gekennzeichnet, dass** die Mittel zum Erfassen einer Identifizierung des Mobiltelefons über das zweite Netz Schaltkreise (112) zum Einrichten einer lokalen Verbindung mit dem Mobiltelefon umfassen.

7. Vorrichtung nach einem der Ansprüche 1 bis 6, **dadurch gekennzeichnet, dass** die Mittel zum Erfassen einer Identifizierung des Mobiltelefons über das zweite Netz Schaltkreise (114) zum Abspeichern der Identifizierung des Mobiltelefons umfassen.

8. Verfahren zum Übertragen eines Datenflusses von einer Datenquelle, die durch eine Einrichtung über ein erstes Netz zum Übertragen von Daten empfangen werden, **dadurch gekennzeichnet, dass**:
eine Identifizierung eines Mobiltelefons über ein zweites Netz erfasst wird (204),
in der Einrichtung Daten aus den über das erste Netz empfangenen Daten erzeugt werden (205),
von der Vorrichtung die Daten über das zweite Netz an das Mobiltelefon gesendet werden (206).

9. Verfahren nach Anspruch 8, **dadurch gekennzeichnet, dass** der empfangene Datenstrom Fernsehsignale umfasst.

10. Verfahren nach einem der Ansprüche 8 oder 9, **dadurch gekennzeichnet, dass** das erste und das zweite Netz identisch sind und vorzugsweise das Internet sind.

11. Verfahren nach einem der Ansprüche 8 oder 9, **dadurch gekennzeichnet, dass** das erste Netz das Internet und das zweite Netz ein GSM-Netz ist.

12. Verfahren nach einem der Ansprüche 8 oder 9, **dadurch gekennzeichnet, dass** das erste Netz ein Fernsehübertragungsnetz ist und das zweite Netz vorzugsweise das Internet ist.

13. Verfahren nach einem der Ansprüche 8 bis 12, **dadurch gekennzeichnet, dass** die von dem Mobiltelefon über das zweite Netz empfangenen Daten an eine zweite Einrichtung übertragen werden (208).

## Claims

1. Device for transfer of a data stream including an apparatus (101) connected via a first data broadcasting network to a data source (108), ***characterised by** the fact that* the apparatus includes:
- means (109, 110, 114) for obtaining an identifier, on a second (102) data broadcasting network, of a mobile telephone,
- means (109, 110) for transmitting data produced by the apparatus from data received from the source to the mobile telephone and via the second network.

2. Device as described in claim 1, ***characterised by** the fact that* the apparatus is a television receiver/decoder.

3. Device as described in one of claims 1 or 2, ***characterised by** the fact that* the first and the second network are identical and preferably the Internet network.

4. Device as described in one of claims 1 or 2, ***characterised by** the fact that* the first network is of Internet type and the second network is of GSM type.

5. Device as described in one of claims 1 or 2, ***characterised by** the fact that* the first network is of television broadcasting network type and the second network is preferably of Internet type.

6. Device as described in one of claims 1 to 5, ***characterised by** the fact that* the means for obtaining an identifier of the mobile telephone on the second network include circuits (112) for establishing a local connection with the mobile telephone.

7. Device as described in one of claims 1 to 6, ***characterised by** the fact that* the means for obtaining an identifier of the mobile telephone on the second network include circuits (114) for storing the identifier of the mobile telephone.

8. Process for transfer of a data stream transmitted by a data source and received by an apparatus via a first data broadcasting network, ***characterised by** the fact that*:
- an identifier is obtained (204), on a second network, of a mobile telephone,
- data are produced (205), in the apparatus, from data received via the first network,
- the data produced are transmitted (206), from the apparatus, to the mobile telephone via the second network.

9. Process as described in claim 8, ***characterised by** the fact that* the data stream received is a television stream.

10. Process as described in one of claims 8 or 9, ***characterised by** the fact that* the first and the second network are identical and preferably the Internet network.

11. Process as described in one of claims 8 or 9, ***characterised by** the fact that* the first network is of Internet type and the second network is of GSM type.

12. Process as described in one of claims 8 or 9, ***characterised by** the fact that* the first network is of television broadcasting type and the second network is preferably of Internet type.

13. Process as described in one of claims 8 to 12, ***characterised by** the fact that* data received by the mobile telephone are transferred (208) via the second network to a second apparatus. Claim 13: It is not clear in the French whether the phrase "via the second network" limits "received" or "transferred". In English, the word order prevents the ambiguity from remaining.
